# EUROPEAN PATENT SPECIFICATION

(11) **EP 0 564 486 B1**
(45) Date of publication and mention of the grant of the patent: **23.08.1995**
(21) Application number: 92900746.6
(22) Date of filing: 12.11.1991
(51) Int. Cl.: F16K 37/00, G01S 17/88

(54) **LASER POSITION INDICATOR FOR VALVE STEM**
LASER-POSITIONANZEIGER FÜR EINEN VENTILSCHAFT
INDICATEUR DE POSITION A LASER POUR UNE TIGE DE SOUPAPE

(30) Priority: 27.12.1990 US 634419
(43) Date of publication of application: 13.10.1993
(73) Proprietor: COMBUSTION ENGINEERING, INC., Windsor Connecticut 06095-0500 (US)
(72) Inventor: HAYES, John, Port Clinton, OH 43452 (US); JEFFERS, Larry, Alliance, OH 44601 (US)
(74) Representative: Rupprecht, Klaus, Dipl.-Ing.
(86) International application number: US9108283
(87) International publication number: WO9212373

(56) References cited:
- WO-A-90/15948
- US-A- 3 937 574
- PATENT ABSTRACTS OF JAPAN vol. 9, no. 209 (M-407)(1932) 27 August 1987

## Description

### Background of the Invention

The present invention relates to valve diagnostics, and more particularly, to the non-intrusive measurement of valve stem displacement during valve actuation.

Diagnostic techniques for determining the operating characteristics of valves in the field have been in general use for a number of years. These techniques usually involve connecting sensors of various types to portions of the valve system whereby upon actuation of the valve, a record of the relationship between the independent actuating variable and the dependent response variable can be obtained and analyzed. The response variable can be force-related or displacement-related, depending on the type of valve and the accessibility of the components in the transmission mechanisms in the valve. Desirably, the response variable is sensed as close as possible to the valve seat, thereby obtaining a more reliable indication of the actual thrust of the valve member against the seat for a given degree of actuation.

Document WO-A-90 15948, falling within the terms of Article 54 (3) EPC, discloses a non-intrusive technique for measuring the stem displacement of a valve of the type in which a portion of the stem is visible. The preferred embodiment of the sensor is sensitive to light, especially in the visible spectrum, whereby discrete signals generated in a video camera due to movement of the stem, are converted to distance units for measuring the stem displacement. This technique is easy to implement in the harsh environment of a nuclear power plant, and provides sufficient resolution for achieving improved diagnostics relative to previously available techniques.

The need for even more easily implemented, more precise techniques continues to grow, however, and the present invention represents such improvement.

### Summary of the Invention

It is thus an object of the present invention to provide an easily implemented, non-intrusive valve stem displacement measuring apparatus and method for a valve diagnostic system.

This object is accomplished in accordance with the present invention, by temporarily mounting a laser beam source and a laser beam sensor at the valve so that the source beam is influenced by the movement of the stem and this influence is manifested at the sensor.

In the system embodiment for acquiring stem displacement data from a valve in the field, the valve having a body, an operator, and a stem driven in response to actuation of the operator so as to move along a predefined path to position a valve member between open and closed conditions within the body, the invention is characterized by a target having a light-reflecting surface in fixed relation relative to one of the stem or the valve body; first means, for projecting a laser source beam; second means for receiving a laser beam, said first and second means being mounted fixedly relative to each other and relative to the other of said stem of valve body, such that the source beam from the first means projects onto said target surface and reflects from the target surface onto the second means whereby the time interval for the source beam to travel to the target surface and the reflected beam to travel from the target surface to the second means is influenced by the movement of the stem; and third means, coupled to the second means, for generating an output signal commensurate with the influence of the stem movement on the reflected beam.

In the method embodiment for acquiring characteristic data from a valve in the field, wherein the valve includes a body, a movable stem having one end penetrating the body for moving a valve member between open and closed flow conditions and another end connected to an operator that is actuated by an energy source, the invention is characterized by the steps of selecting a light-reflecting target surface that is fixed in relation to one of the valve body or valve stem; projecting a laser beam from a source onto the target surface, thereby establishing a reflected beam from the target surface, said source being spaced from the target surface and in fixed relation to the other of said valve body or valve stem; actuating the stem so as to change the spacing between the source and the target surface, thereby influencing the time interval for the source beam to travel to and be reflected from the target surface; sensing the reflected beam from a plurality of positions of the actuated stem; and from the sensed reflected beam, determining the distance between two of said plurality of positions.

Preferably, a reflective target is mounted on the stem and the laser source and reflector are mounted in stationary positions on the valve body or yoke. The movement of the stem influences the time interval required for the source beam to travel to the target and the reflected beam to travel from the target to the sensor. The source and sensor can be housed in a single head that is easily secured to the valve body adjacent the stem, with the source beam projecting substantially in parallel with the stem and the reflected beam returning to the head substantially in parallel with the source beam.

### Brief Description of the Drawings

These and other objects and advantages of the invention will be described in greater detail below with reference to the accompanying drawings, in which:
Figure 1 is a schematic representation of a diagnostic system that embodies the present invention, as deployed on a pneumatic valve;
Figure 2 is a partially cut view of the preferred laser sensor head of Figure 1, which contains a laser beam source, reflected beam sensor, and optical-to-electrical transducer;
Figure 3 is an elevation view of the controller for the sensor head shown in Figure 2.

### Description of the Preferred Embodiment

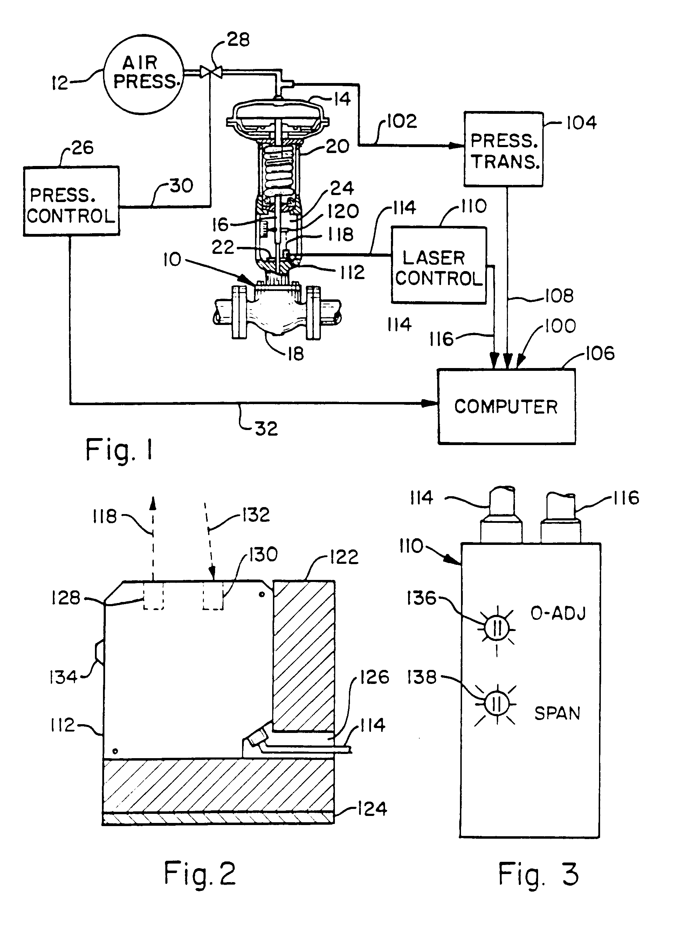

Figure 1 schematically represents a conventional valve 10 installed in a plant, such as a pneumatically operated valve in a nuclear power plant. In such a valve, a source 12 of high pressure is selectively applied to the actuation chamber 14 of the valve, by which a diaphragm (not shown), is forced downwardly against the stem 16, which in turn urges the valve member (not shown) against a valve seat (not shown) in the valve body 18. The actuation chamber 14, or operator, is rigidly connected to the body 18, by a yoke 20 extending therebetween. The stem 16 enters the body 18 axially through a penetration in the body upper surface 22.

The nominal or design relationship of stem displacement as a function of pressure as controlled by the valve controller 26 and associated control valve 28 via line 30, is known from the manufacturer, but the actual relationship under field conditions can be significantly different. The actual relationship is one of the characteristics for which data can be acquired with the present invention.

A valve data acquisition system 100 is selectively, and preferably portably, connectable to the valve 10 as part of a periodic program of valve diagnostic testing for installed valves. A pressure tap 102 and associated transducer 104 senses the pressure applied to the operator 14, and delivers a signal commensurate therewith to computer or intermediate data processor 106 via line 108. In accordance with the present invention, the dependent parameter of stem displacement is measured by a laser-based detector operated through controller 110. The controller 110 receives a first signal from the laser sensor head 112 via line 114, and delivers a conditioned second signal commensurate with stem displacement to computer 106 along line 116. Optionally, a signal from the pressure controller can be delivered via line 32 to the computer 106 for comparison with the pressure signal on line 108.

At the time data are to be acquired from a particular valve 10, the diagnostic or data acquisition system 100 is located adjacent the valve and the pressure tap 102 connected. The sensor head 112 is mounted on the body upper surface 22 so that a source laser beam 118 can be projected upwardly substantially in parallel with the stem 16. A small target 120 that highly reflects light at the wavelength of the source beam 118, is connected to the stem so that the target is in the path of source beam 118. The head 112 preferably also includes a sensor responsive to the reflected beam, which returns to the head along a path that is only slightly angled relative to the path of the source beam 118, i.e., the reflected beam is substantially parallel to the source beam as would be observed by the human eye.

It should be appreciated that in most pneumatically operated valves, appreciable free space 24 exists among the axially extending structures that define the yoke 20. Thus, not only is a portion of the stem 16 visible, but an undisturbed, longitudinal channel is available within which the beam 118 can be established and the target 120 can reciprocate. The present invention can be implemented in other types of valves where similar conditions exist. In other words, regardless of the type of operator or the path of stem movement, the invention can be implemented so long as the target can move without obstruction and the beam can be projected from the source and reflected by the target to the sensor, from at least the positions along the path of movement of the target corresponding to a known initial actuation or actuated condition (e.g., fully open) and a final actuation or actuated condition (e.g., fully closed). If the free space 24 is ample, the sensor head 112 can be mounted in fixed relation relative to (e.g., on) the stem, and the target member can be a stationary reflective surface in fixed relation to the body, i.e., at 22.

Figure 2 shows the preferred form of the sensor head 112. Head 112 has substantially square opposed sides and a thickness into the plane of the drawing that is less than one half the dimension of one edge of the square. Preferably, the head 112 is secured in a protective, generally L-shaped mounting block 122 that has a flat lower surface 124 treated to adhere to the upper surface 22 on valve body 18 adjacent the stem 16 (see Figure 1). The block 122 includes an opening 126 through which the sensor line or cable 114 connects to controller 110. The head 112 fits in the notch of mounting block 122 such that source beam lens 128 and sensor lens 130 are exposed, to project source beam 118 upwardly and receive the downwardly reflected beam 132, respectively. For reasons to be explained below, an LED 134 on the sensor head is also exposed.

A sensor head of the type described with respect to Figure 2, is commercially available as the Keyence Model LB-01 from the Keyence Corporation of America, Fairlawn, N.J. The preferred controller 110, shown schematically in Figure 3, is Model LB-60. When used together, they provide a measurement range of 60-140 mm using a semiconductor laser at a wavelength of 780 nm. The spot diameter projected on the target is about 1.0 x 2.0 mm. From the centered zero setting at the midpoint distance of the range, i.e., at 100 mm, the linearity is about 1.5 per cent to either end of the range and better than 1.0 per cent within +/-20 mm of the midpoint. Resolution on the order of tens of micrometers is far better than with other techniques. With the indicated controller 110, the output signal delivered to the computer 106 along line 116 (see Fig. 1) is an analog voltage that varies substantially linearly with target movement along a straight line toward or away from the sensor head 112. The time interval between the projection and receipt of a given wave or pulse is converted to a voltage within the controller 110 in response to the energy patterns at lenses 128, 130. The output voltage can readily be converted to digital form either with a preprocessor (not shown) between the controller 110 and the computer 106, or in a data interface in the computer, according to well known techniques. The zero voltage output of the controller 110 can be adjusted to any distance within the measurement range of head 112 by turning trimmer dial 136. Also, the voltage span can be adjusted +/-30 per cent from the nominal response of 1 volt per centimeter, with trimmer 138.

Calibration of the head 112 is preferably completed before the technician enters the process area of the plant where the valves are to be tested. The conventional power supply (not shown) is connected and a sample target 120 is located a distance from the sensor head 112 approximately equal to the distance the target will be from the sensor head on the valve, when the valve is at the initial test condition, e.g., fully open. When the target is within the measurement range, the LED 134 lights yellow, and when the target is placed near the center of the measurement range (at about 100 mm) the LED lights green. The zero voltage trimmer 136 is then adjusted as needed or desired, and the output is checked to assure that a voltage proportional to target displacement is obtained. Once calibrated, the same head 112 and target 120 can be used repeatedly for acquiring stem displacement data from many valves.

The capability to calibrate with the controller 110 in advance and the ease with which both the target 120 and head 112 can be mounted on the valve stem 16 and body portion 22, respectively, enable a technician in protective clothing to quickly set up and perform the data acquisition procedures at a given valve. The technician need not precisely locate the target 120 on the stem, because the important dependant variable is stem absolute displacement, not absolute position. Thus, as long as the stem displacement corresponding to a full stroke of the valve is less then the measurement range of the head 112, the technician can use a simple ruler or the like to mount the target 120 an acceptable distance from the head 112. In a less desirable embodiment, the source beam lens and the reflected beam lens could be situated in different heads, but calibration would be more difficult unless the heads remained in a fixed geometric relationship.

Thus, it should be appreciated that the present invention accomplishes the objectives stated above. Moreover, the invention can be used in other types of fluidly operated valves, and in valves having a predefined path of stem movement other than strictly linear, e.g., screw or rotary. For measuring rotary displacement, the laser source beam would be directed transversely to the stem axis so as to intersect the path of the target at a plurality of points along the path. Furthermore, the target could be integral with or a permanent appendage to the stem, so long as it has, or can be modified to have, a reflective surface that traces a repeatable path commensurate with the path of the stem itself.

Although an illustrative embodiment has been described, the scope of exclusive rights sought to be protected by letters patent is not limited to the illustrated embodiment, but rather is defined by the appended claims.

## Claims

1. A system for acquiring stem displacement data from a valve in the field, the valve having a body (18), an operator (14), and a stem (16) driven in response to actuation of the operator so as to move along a predefined path to position a valve member between open and closed conditions within the body, characterized by a target (120) having a light-reflecting surface in fixed relation relative to one of the stem (16) or the valve body (18); first means (128), for projecting a laser source beam (118); second means (130) for receiving a laser beam (132), said first and second means being mounted fixedly relative to each other and relative to the other of said stem of valve body, such that the source beam (118) from the first means projects onto said target surface (120) and reflects from the target surface onto the second means (130) whereby the time interval for the source beam to travel to the target surface and the reflected beam to travel from the target surface to the second means is influenced by the movement of the stem; and third means (110), coupled to the second means, for generating an output signal (116) commensurate with the influence of the stem movement on the reflected beam.

2. The system of claim 1, wherein the valve includes a yoke (20) surrounding the stem (16) between the body (18) and the operator (14), the target (120) is appended to the stem such that the target surface traces a target path within the yoke, and the first and second means (128,130) are mounted so that the source and reflected beam pass through the yoke.

3. The system of claim 2, wherein the first means (128) and the second means (130) are mounted on the body (18) such that the beams are established substantially in parallel with the stem.

4. The system of claim 1, wherein the first means (128) and the second means (130) are mounted on the body (18) such that the beams are established substantially in parallel with the stem.

5. The system of claim 2, wherein the first and second means (128,130) are contained within a single sensor head (112) mounted on one of the body (18) or the yoke (20).

6. The system of claim 1, wherein the valve operator (14) is fluidly actuated, and the system includes fourth means (104), connected (102) to the operator, for generating a signal (108) commensurate with the fluid pressure in the operator while the third means (110) generates an output signal commensurate with the distance travelled by the target (120).

7. The system of claim 6, wherein the valve is pneumatically operated.

8. The system of claim 1, wherein the valve (10) includes a yoke (20) surrounding the stem between the body (18) and the operator (14), and the target surface is carried by a target member (120) which is appended to the stem (16) such that the target member moves with the stem in the yoke.

9. The system of claim 1, wherein the first means (128) and the second means (130) are mounted in fixed relation to the body (18) such that the beams are established substantially in parallel with the stem (16).

10. The system of claim 1, wherein the first means (128) and the second means (130) are mounted in temporary fixed relation to the body (18) such that the beams are established substantially in parallel with the stem.

11. The system of claim 1, wherein the valve includes a yoke (20) surrounding the stem (16) between the body (18) and the operator (14) and first and second means (128,130) are contained within a single sensor head (112) temporarily mounted on one of the body (18) or the yoke (20).

12. The system of claim 11, wherein the valve operator (14) is fluidly actuated, and the system includes fourth means (104), connected (102) to the operator, for generating a signal (108) commensurate with the fluid pressure in the operator while the third means (110) generates an output signal commensurate with the distance travelled by the target member.

13. The system of claim 12, wherein the valve is pneumatically operated.

14. The system of claim 1, wherein the target (120) is a surface fixed in relation to the body (18), the first means (128) and second means (130) are fixed relative to each other but movable with the stem (16), and the third means (110) generates an output signal commensurate with the movement of the first and second means relative to the target member.

15. The system of claim 1, wherein the first (128) and second (130) means are closely spaced for projecting and receiving source (118) and reflected (132) beams, respectively.

16. A method for acquiring characteristic data from a valve in the field, wherein the valve (10) includes a body (18), a movable stem (16) having one end penetrating the body for moving a valve member between open and closed flow conditions and another end connected to an operator (14) that is actuated by an energy source (12), characterized by the steps of selecting a light-reflecting target surface (120) that is fixed in relation to one of the valve body (18) or valve stem (16); projecting a laser beam (118) from a source (128) onto the target surface (120), thereby establishing a reflected beam (132) from the target surface, said source (128) being spaced from the target surface and in fixed relation to the other of said valve body (18) or valve stem (16); actuating the stem so as to change the spacing between the source and the target surface, thereby influencing the time interval for the source beam to travel to and be reflected from the target surface; sensing the reflected beam (132) from a plurality of positions of the actuated stem (16); and from the sensed reflected beam (132), determining the distance between two of said plurality of positions.

17. The method of claim 16, further comprising the steps of, measuring a variable (26) commensurate with the actuation energy (12) applied to the operator (14), and correlating (106) said applied energy with said determined distance.

18. The method of claim 16, wherein the valve has a yoke through which the stem moves, and the steps of projecting and sensing are preceded by the step of temporarily mounting the reflecting surface to the stem in the yoke and temporarily mounting a laser source beam generator (128) and a laser beam sensor (130) on the valve adjacent the stem (16).

19. The method of claim 16, wherein the step of projecting includes the step of establishing an uninterrupted reflected beam (132) that is continuously influenced as the stem is actuated.

20. The method of claim 16, including the step of temporarily mounting said source (128) in fixed relation to the other of said valve body (18) or stem (16) after the valve (10) has been installed in the field.

21. The method of claim 20, including the steps of generating a first signal (114) commensurate with the sensed reflected beam (130,132); from the first signal (114), delivering a second signal (116) commensurate with stem displacement to a data processor (100); and while the valve (10) remains installed, demounting said source (128) after the second signal (116) is delivered to the data processor.

22. The method of claim 17, wherein, for a given valve, after the reflected beam has been sensed for a plurality of positions and the variable commensurate with the actuation energy has been measured, the source (128) and target (120) from said given valve are removed from said valve and temporarily mounted on another valve where the method steps recited in claim 17 are repeated.

23. The method of claim 22, wherein the relationship between the time interval for the source beam to travel to and be reflected from the laser source and target surface and the spacing between the laser source and target surface is calibrated before the source and target surface are mounted on said given valve, and the removal of the source and target, the mounting thereof on said other valve, and the repeating of said steps on said other valve, are performed without recalibration.

## Patentansprüche

1. System zur Erfassung von Spindelbewegungsdaten eines im Einsatz befindlichen Ventils, wobei das Ventil einen Körper (18), ein Bedienteil (14) und eine Spindel (16) aufweist, die als Reaktion auf Betätigung des Bedienteils so angetrieben wird, daß sie sich zur Positionierung eines Ventilglieds zwischen einem geöffneten und einem geschlossenen Zustand entlang einem vordefinierten Weg bewegt, gekennzeichnet durch ein Ziel (120) mit einer lichtreflektierenden Fläche, die entweder gegenüber der Spindel (16) oder dem Ventilkörper (18) in feststehender Beziehung steht; ein erstes Mittel (128) zur Projektion eines Laserquellenstrahls (118); ein zweites Mittel (130) zum Empfang eines Laserstrahls (132), wobei das erste und zweite Mittel gegenüber einander und entweder gegenüber der Spindel bzw. dem Ventilkörper fest angebracht sind, so daß der Quellenstrahl (118) von dem ersten Mittel auf die Zielfläche (120) projiziert und von der Zielfläche auf das zweite Mittel (130) reflektiert, wodurch die Zeitspanne, die der Quellenstrahl benötigt, um zur Zielfläche zu laufen, und die der reflektierte Strahl benötigt, um von der Zielfläche zum zweiten Mittel zu laufen, von der Spindelbewegung beeinflußt wird; und ein mit dem zweiten Mittel verbundenes drittes Mittel (110) zur Erzeugung eines dem Einfluß der Spindelbewegung auf den reflektierten Strahl entsprechenden Ausgangssignals (116).

2. System nach Anspruch 1, bei dem das Ventil ein die Spindel (16) zwischen dem Körper (18) und dem Bedienteil (14) umgebendes Joch (20) enthält, das Ziel (120) so an der Spindel angebracht ist, daß die Zielfläche einen Zielweg innerhalb des Jochs verfolgt, und das erste und zweite Mittel (128, 130) so befestigt sind, daß die Quelle und der reflektierte Strahl durch das Joch gehen.

3. System nach Anspruch 2, bei dem das erste Mittel (128) und das zweite Mittel (130) so am Körper (18) befestigt sind, daß die Strahlen im wesentlichen parallel zur Spindel eingestellt werden.

4. System nach Anspruch 1, bei dem das erste Mittel (128) und das zweite Mittel (130) so am Körper (18) befestigt sind, daß die Strahlen im wesentlichen parallel zur Spindel eingestellt werden.

5. System nach Anspruch 2, bei dem das erste und das zweite Mittel (128, 130) in einem einzigen Sensorkopf (112) enthalten sind, der entweder am Körper (18) oder am Joch (20) befestigt ist.

6. System nach Anspruch 1, bei dem das Ventilbedienteil (14) durch ein Fluid betätigt wird und das System ein mit dem Bedienteil verbundenes (102) viertes Mittel (104) zur Erzeugung eines dem Fluiddruck im Bedienteil entsprechenden Signals (108) enthält, während das dritte Mittel (110) ein der vom Ziel (120) zurückgelegten Strecke entsprechendes Ausgangssignal erzeugt.

7. System nach Anspruch 6, bei dem das Ventil mit Druckluft betätigt wird.

8. System nach Anspruch 1, bei dem das Ventil (10) ein die Spindel zwischen dem Körper (18) und dem Bedienteil (14) umgebendes Joch (20) enthält und die Zielfläche von einem Zielglied (120) getragen wird, das so an der Spindel (16) angebracht ist, daß sich das Zielglied mit der Spindel im Joch bewegt.

9. System nach Anspruch 1, bei dem das erste Mittel (128) und das zweite Mittel (130) in feststehender Beziehung zum Körper (18) befestigt sind, so daß die Strahlen im wesentlichen parallel zur Spindel (16) eingestellt werden.

10. System nach Anspruch 1, bei dem das erste Mittel (128) und das zweite Mittel (130) in vorübergehender feststehender Beziehung zum Körper (18) befestigt sind, so daß die Strahlen im wesentlichen parallel zur Spindel eingestellt werden.

11. System nach Anspruch 1, bei dem das Ventil ein die Spindel (16) zwischen dem Körper (18) und dem Bedienteil (14) umgebendes Joch (20) enthält und ein erstes und zweites Mittel (128, 130) in einem einzigen Sensorkopf (112) enthalten sind, der vorübergehend entweder an dem Körper (18) oder dem Joch (20) befestigt ist.

12. System nach Anspruch 11, bei dem das Ventilbedienteil (14) durch ein Fluid betätigt wird und das System ein mit dem Bedienteil verbundenes (102) viertes Mittel (104) zur Erzeugung eines dem Fluiddruck im Bedienteil entsprechenden Signals (108) enthält, während das dritte Mittel (110) ein der vom Zielglied zurückgelegten Strecke entsprechendes Ausgangssignal erzeugt.

13. System nach Anspruch 12, bei dem das Ventil mit Druckluft betätigt wird.

14. System nach Anspruch 1, bei dem das Ziel (120) eine gegenüber dem Körper (18) feststehende Fläche ist, das erste Mittel (128) und das zweite Mittel (130) gegenüber einander feststehend, aber mit der Spindel (16) beweglich sind, und das dritte Mittel (110) ein der Bewegung des ersten und zweiten Mittels gegenüber dem Zielglied entsprechendes Ausgangssignal erzeugt.

15. System nach Anspruch 1, bei dem das erste (128) und zweite (130) Mittel zur Projektion und zum Empfang der Quellenstrahlen (118) bzw. der reflektierten Strahlen (132) in geringem Abstand voneinander angeordnet sind.

16. Verfahren zur Erfassung charakteristischer Daten eines im Einsatz befindlichen Ventils, wobei das Ventil (10) einen Körper (18) und eine bewegliche Spindel (16) aufweist, deren eines Ende in den Körper eindringt, um ein Ventilglied zwischen einem geöffneten und einem geschlossenen Strömungszustand zu bewegen, und deren anderes Ende mit einem von einer Energiequelle (12) betätigten Bedienteil (14) verbunden ist, gekennzeichnet durch folgende Schritte: Auswählen einer lichtreflektierenden Zielfläche (120), die entweder gegenüber dem Ventilkörper (18) oder der Ventilspindel (16) feststeht; Projektion eines Laserstrahls (118) von einer Quelle (128) auf die Zielfläche (120), wodurch ein reflektierter Strahl (132) von der Zielfläche produziert wird, wobei die Quelle (128) von der Zielfläche beabstandet ist und entweder gegenüber dem Ventilkörper (18) oder der Ventilspindel (16) in feststehender Beziehung steht; Betätigen der Spindel, um den Abstand zwischen der Quelle und der Zielfläche zu ändern, wodurch die Zeitspanne, die der Quellenstrahl benötigt, um zur Zielfläche zu laufen und von ihr reflektiert zu werden, beeinflußt wird; Erfassung des reflektierten Strahls (132) von mehreren Positionen der betätigten Spindel (16); und - aus dem erfaßten reflektierten Strahl (132) - Bestimmung des Abstands zwischen zwei der mehreren Positionen.

17. Verfahren nach Anspruch 16, das weiterhin folgende Schritte umfaßt: Messung einer der auf das Bedienteil (14) ausgeübten Betätigungsenergie (12) entsprechenden Variablen (26) und Korrelation (106) der ausgeübten Energie mit dem bestimmten Abstand.

18. Verfahren nach Anspruch 16, bei dem das Ventil ein Joch aufweist, durch das sich die Spindel bewegt, und der Schritt der vorübergehenden Befestigung der reflektierenden Fläche an der Spindel im Joch und der vorübergehenden Befestigung einer Erzeugungsvorrichtung (128) eines Laserquellenstrahls und eines Laserstrahlsensors (130) am Ventil neben der Spindel (16) den Schritten der Projektion und Erfassung vorangeht.

19. Verfahren nach Anspruch 16, bei dem der Schritt der Projektion den Schritt der Einstellung eines ununterbrochenen reflektierten Strahls (132), der bei Betätigung der Spindel kontinuierlich beeinflußt wird, enthält.

20. Verfahren nach Anspruch 16, das den Schritt der vorübergehenden Befestigung der Quelle (128) in feststehender Beziehung entweder zum Ventilkörper (18) oder zur Ventilspindel (16), nachdem das Ventil (10) vor Ort installiert wurde, enthält.

21. Verfahren nach Anspruch 20, das folgende Schritte enthält: Erzeugung eines dem erfaßten reflektierten Strahl (130, 132) entsprechenden ersten Signals (114); - aus dem ersten Signal (114) - Abgabe eines der Spindelbewegung entsprechenden zweiten Signale (116) an eine Datenverarbeitungsanlage (100); und - während das Ventil (10) noch installiert bleibt - Abbau der Quelle (128), nachdem das zweite Signal (116) an die Datenverarbeitungsanlage abgegeben wurde.

22. Verfahren nach Anspruch 17, bei dem bei einem gegebenen Ventil die Quelle (128) und das Ziel (120) dieses gegebenen Ventile aus dem Ventil genommen und vorübergehend an einem anderen Ventil, bei dem die in Anspruch 17 aufgeführten Verfahrensschritte wiederholt werden, befestigt werden, nachdem der reflektierte Strahl für mehrere Positionen erfaßt und die der Betätigungsenergie entsprechende Variable gemessen wurde.

23. Verfahren nach Anspruch 22, bei dem die Beziehung zwischen der Zeitspanne, die der Quellenstrahl benötigt, um zur Laserquelle und Zielfläche zu laufen und davon reflektiert zu werden, und dem Abstand zwischen der Laserquelle und der Zielfläche kalibriert wird, bevor die Quelle und die Zielfläche an dem gegebenen Ventil befestigt werden, und das Abnehmen von Quelle und Ziel, deren Befestigung an dem anderen Ventil und die Wiederholung der Schritte an dem anderen Ventil ohne erneute Kalibrierung ausgeführt werden.

## Revendications

1. Un système pour acquérir des données sur le déplacement de la queue à partir d'une soupape sur le terrain, la soupape ayant un corps (18), un opérateur (14), et une queue (16) entraînée en réponse à la manoeuvre de l'opérateur de façon à se déplacer le long d'une trajectoire prédéfinie pour positionner un élément de soupape entre des positions ouverte et fermée à l'intérieur du corps, caractérisé par une cible (120) ayant une surface réfléchissant la lumière en relation fixe par rapport à un élément parmi la queue (16) et le corps de soupape (18); des premiers moyens (128), pour projeter un faisceau laser incident (118); des deuxièmes moyens (130) pour recevoir un faisceau laser (132), lesdits premiers et deuxième moyens étant montés fixement l'un par rapport à l'autre et par rapport à l'autre desdits éléments parmi la queue et le corps de soupape, de telle façon que le faisceau incident (118) venant des premiers moyens se projette sur ladite surface de la cible (120) et se réfléchisse depuis la surface de la cible sur les deuxièmes moyens (130), l'intervalle de temps mis par le faisceau incident pour aller jusqu'à la surface de la cible et par le faisceau réfléchi pour revenir depuis la surface de la cible jusqu'aux deuxièmes moyens étant influencé par le mouvement de la queue; et des troisièmes moyens (110), couplés aux deuxièmes moyens, pour générer un signal de sortie (116) proportionnel à l'influence du mouvement de la queue sur le faisceau réfléchi.

2. Le système de la revendication 1, dans lequel la soupape comprend une armature (20) entourant la queue (16) entre le corps (18) et l'opérateur (14), la cible (120) est attachée à la queue de telle façon que la surface de la cible trace une trajectoire de cible à l'intérieur de l'armature, et les premiers et deuxièmes moyens (128, 130) sont montés de telle façon que la faisceau incident et le faisceau réfléchi passent à travers l'armature.

3. Le système de la revendication 2, dans lequel les premiers moyens (128) et les deuxièmes moyens (130) sont montés sur le corps (18) de telle façon que les faisceaux soient formés substantiellement parallèlement à la queue.

4. Le système de la revendication 1, dans lequel les premiers moyens (128) et les deuxièmes moyens (130) sont montés sur le corps (18) de telle façon que les faisceaux soient formés substantiellement parallèlement à la queue.

5. Le système de la revendication 2, dans lequel les premiers et deuxièmes moyens (128, 130) sont contenus à l'intérieur d'une seule tête de détecteur (112) montée sur un élément parmi le corps (18) et l'armature (20).

6. Le système de la revendication 1, dans lequel l'opérateur de soupape (14) est actionné à l'aide d'un fluide, et le système comprend des quatrièmes moyens (104), raccordés (102) à l'opérateur, pour générer un signal (108) proportionnel à la pression de fluide dans l'opérateur tandis que les troisièmes moyens (110) génèrent un signal de sortie proportionnel à la distance parcourue par la cible (120).

7. Le système de la revendication 6, dans lequel la soupape est actionnée de manière pneumatique.

8. Le système de la revendication 1, dans lequel la soupape (10) comprend une armature (20) entourant la queue entre le corps (18) et l'opérateur (14), et la surface de la cible est portée par un élément de cible (120) qui est attaché à la queue (16) de telle façon que l'élément de cible se déplace avec la queue dans l'armature.

9. Le système de la revendication 1, dans lequel les premiers moyens (128) et les deuxièmes moyens (130) sont montés en relation fixe par rapport au corps (18) de telle façon que les faisceaux soient formés substantiellement parallèlement à la queue (16).

10. Le système de la revendication 1, dans lequel les premiers moyens (128) et les deuxièmes moyens (130) sont montés en relation fixe temporaire par rapport au corps (18) de telle façon que les faisceaux soient formés substantiellement parallèlement à la queue.

11. Le système de la revendication 1, dans lequel la soupape comprend une armature (20) entourant la queue (16) entre le corps (18) et l'opérateur (14), et les premiers et deuxièmes moyens (128, 130) sont contenus à l'intérieur d'une seule tête de détecteur (112) temporairement montée sur un élément parmi le corps (18) et l'armature (20).

12. Le système de la revendication 11, dans lequel l'opérateur de soupape (14) est actionné à l'aide d'un fluide, et le système comprend des quatrièmes moyens (104), raccordés (102) à l'opérateur, pour générer un signal (108) proportionnel à la pression de fluide dans l'opérateur tandis que les troisièmes moyens (110) génèrent un signal de sortie proportionnel à la distance parcourue par l'élément de cible.

13. Le système de la revendication 12, dans lequel la soupape est actionnée de manière pneumatique.

14. Le système de la revendication 1, dans lequel la cible (120) est une surface immobile en relation par rapport au corps (18), les premiers moyens (128) et les deuxièmes moyens (130) sont immobiles les uns par rapport aux autres mais sont mobiles avec la queue (16), et les troisièmes moyens (110) génèrent un signal de sortie proportionnel au mouvement des premiers et deuxièmes moyens par rapport à l'élément de cible.

15. Le système de la revendication 1, dans lequel les premiers (128) et deuxièmes (130) moyens sont légèrement espacés pour projeter et recevoir un faisceau incident (118) et un faisceau réfléchi (132), respectivement.

16. Une méthode pour acquérir des données caractéristiques à partir d'une soupape sur le terrain, dans laquelle la soupape (10) comprend un corps (18), une queue mobile (16) ayant une extrémité pénétrant dans le corps pour déplacer un élément de soupape entre des positions d'écoulement ouverte et fermée et une autre extrémité raccordée à un opérateur (14) qui est manoeuvré par une source d'énergie (12), caractérisée par les étapes de sélection d'une surface de cible (120) réfléchissant la lumière, qui est fixée par rapport à un élément parmi le corps de soupape (18) et la queue de soupape (16); de projection d'un faisceau laser (118) à partir d'une source (128) sur la surface de la cible (120), formant de ce fait un faisceau réfléchi (132) venant de la surface de la cible, ladite source (128) étant espacée de la surface de la cible et en relation fixe par rapport à l'autre desdits éléments parmi le corps de soupape (18) et la queue de soupape (16); de manoeuvre de la queue de façon à modifier l'espacement entre la source et la surface de la cible, influençant de ce fait l'intervalle de temps mis par le faisceau incident pour aller jusqu'à et être réfléchi depuis la surface de la cible; de détection du faisceau réfléchi (132) à partir d'une pluralité de positions de la queue manoeuvrée (16); et à partir du faisceau réfléchi détecté (132), de détermination de la distance entre deux des positions de ladite pluralité.

17. La méthode de la revendication 16, comprenant en outre les étapes de mesure d'une variable (26) proportionnelle à l'énergie d'actionnement (12) appliquée à l'opérateur (14), et de mise en corrélation (106) de ladite énergie appliquée avec ladite distance déterminée.

18. La méthode de la revendication 16, dans laquelle la soupape a une armature à travers laquelle la queue se déplace, et les étapes de projection et de détection sont précédées par les étapes de montage temporaire de la surface réfléchissante sur la queue dans l'armature et de montage temporaire d'un générateur (128) de faisceau laser incident et d'un détecteur (130) de faisceau laser sur la soupape à proximité de la queue (16).

19. La méthode de la revendication 16, dans laquelle l'étape de projection comprend l'étape de formation d'un faisceau réfléchi ininterrompu (132) qui est influencé de façon continue pendant que la queue est manoeuvrée.

20. La méthode de la revendication 16, comprenant l'étape de montage temporaire de ladite source (128) en relation fixe par rapport à l'autre desdits éléments parmi le corps de soupape (18) et la queue (16) après que la soupape (10) ait été installée sur le terrain.

21. La méthode de la revendication 20, comprenant les étapes de génération d'un premier signal (114) proportionnel au faisceau réfléchi détecté (130, 132); à partir du premier signal (114), de délivrance d'un deuxième signal (116) proportionnel au déplacement de la queue à un processeur de données (100); et, tandis que la soupape (10) reste installée, de démontage de ladite source (128) après que le deuxième signal (116) ait été délivré au processeur de données.

22. La méthode de la revendication 17, dans laquelle, pour une soupape donnée, après que le faisceau réfléchi ait été détecté pour une pluralité de positions et que la variable proportionnelle à l'énergie d'actionnement ait été mesurée, la source (128) et la cible (120) de ladite soupape donnée sont retirées de ladite soupape et temporairement montées sur une autre soupape où les étapes de la méthode énumérées dans la revendication 17 sont répétées.

23. La méthode de la revendication 22, dans laquelle la relation entre l'intervalle de temps mis par le faisceau incident pour aller et être réfléchi depuis la source laser et la surface de la cible et l'espacement entre la source laser et la surface de la cible est étalonnée avant que la source et la surface de la cible ne soient montées sur ladite soupape donnée, et le retrait de la source et de la cible, le montage de celles-ci sur ladite autre soupape, et la répétition desdites étapes sur ladite autre soupape, sont exécutés sans réétalonnage.
